# EUROPÄISCHE PATENTSCHRIFT

(11) **EP 1 008 421 B1**
(45) Veröffentlichungstag und Bekanntmachung des Hinweises auf die Patenterteilung: **25.07.2007**
(21) Anmeldenummer: 99811100.9
(22) Anmeldetag: 30.11.1999
(51) Int. Cl.: B25F 5/00, H01R 13/56

(54) **Elektrisch betreibbares Handgerät**
Electrically operable hand-tool
Outil à main électrique

(30) Priorität: 07.12.1998 DE 19856266
(43) Veröffentlichungstag der Anmeldung: 14.06.2000
(73) Patentinhaber: HILTI Aktiengesellschaft, 9494 Schaan (LI)
(72) Erfinder: Riedl, Reinhard, 86923 Finning (DE)
(74) Vertreter: Wildi, Roland

(56) Entgegenhaltungen:
- US-A- 2 496 612

## Beschreibung

Die Erfindung betrifft ein elektrisch betreibbares Handgerät, insbesondere einen Elektroschrauber und/oder ein Bohrgerät, gemäss dem Oberbegriff des Patentanspruchs 1.

Elektrisch betreibbare Handgeräte, insbesondere Elektroschraubgeräte, Bohrgeräte, Kombigeräte und dergleichen, besitzen ein elektrisches Versorgungskabel, das üblicherweise durch eine Öffnung im Griffbereich geführt ist. Zum Schutz des Kabels ist eine Knickschutzhülse vorgesehen, die im Durchführungsbereich für das Kabel zwischen den Gehäuse- bzw. Griffschalen fixiert ist. Durch die ständigen Knickbewegungen, denen das aus dem Gehäuse ragende Versorgungskabel beim Arbeiten mit dem Handgerät unterliegt, kann es trotz der Knickschutzhülse zu Brüchen der Litzen im Anschlusskabel kommen. Dies führt zum Stillstand des Handgerätes und erfordert einen Austausch des Versorgungskabels.

Bei der Anwendung eines elektrisch betreibbaren Handgeräts, beispielsweise eines Elektroschraubers oder eines Bohrgeräts, besteht immer wieder die Notwendigkeit, das Handgerät aus der Hand zu legen, um ungehindert beide Hände für andere Tätigkeiten einsetzen zu können. Auch kann es beispielsweise bei Montagetätigkeiten auf einem Gerüst oder auf einer Leiter erforderlich sein, kurzfristig vom Gerüst oder der Leiter zu steigen, beispielsweise um weitere Schrauben zu holen oder um die Leiter in die gewünschte Position zu verrücken. Dabei besteht für den Anwender das Problem, den Elektroschrauber oder das Bohrgerät abzulegen und gegen ein Herabfallen zu sichern. Vielfach wird dazu das elektrische Versorgungskabel des Elektroschraubers oder des Bohrgeräts um einen Holm des Gerüsts oder der Leiter gewickelt. Es ist unmittelbar einsichtig, dass eine derartige Massnahme untauglich ist und vielmehr die Gefahr von Kabelbrüchen noch erhöht.

US 2,496,612 beschreibt ein elektrisch betriebenes Werkzeuggerät mit einer Aufhängevorrichtung. Diese weist zwei parallele Riemen auf, deren erste Enden über einen gemeinsamen Stift verschwenkbar an einer Klemme gelagert sind, die an einer Kabeltülle des Versorgungskabels des Werkzeuggerätes befestigt ist. An ihrem zweiten Ende sind die beiden Riemen fest mit einer zweiten Klemme verbunden, die am Versorgungskabel befestigt ist, wobei die Länge des Versorgungskabels zwischen den beiden Klemmen länger ist als die Länge der parallelen Riemen. Beim Aufhängen des Werkzeuggerätes an der zweiten Klemme wird somit die Gewichtskraft über die Kabeltülle, die erste Klemme und die Riemen und nicht über das Versorgungskabel abgetragen.

Aufgabe der vorliegenden Erfindung ist es daher, ein elektrisch betreibbares Handgerät dahingehend zu verbessern, dass bei Bedarf ein sicheres Ablegen des Geräts ermöglicht wird. Gleichzeitig soll die Gefahr von Netzleitungsbrüchen verringert werden.

Die Lösung dieser Aufgaben besteht in einem elektrisch betreibbaren Handgerät, das die im Patentanspruch 1 angeführten Merkmale aufweist. Indem angrenzend an die Durchtrittsöffnung für das Versorgungskabel an der Aussenseite des Handgriffs eine Anschlussvorrichtung vorgesehen ist, kann an das Gerätegehäuse, insbesondere an den Handgriff, eine hakenförmig gekrümmte Aufhängevorrichtung angebunden werden, die unverlierbar am Versorgungskabel gehalten und an beliebiger Stelle des Versorgungskabels festlegbar ist. Die mit dem Gerätegehäuse bzw. mit dem Handgriff lösbar verbundene Aufhängevorrichtung erfüllt zwei Funktionen. Einerseits ermöglicht sie es, bei Bedarf das Handgerät beispielsweise an einer Gerüststrebe oder an einer Leitersprosse aufzuhängen. Andererseits erfüllt die mit dem Handgriff verbundene, hakenförmige Aufhängevorrichtung für das Versorgungskabel eine Stützfunktion. Im Betrieb auftretende Bewegungen führen nicht mehr zu einem Knicken des Versorgungskabels, da dieses an der Aussenseite der hakenförmigen Aufhängevorrichtung anliegt und nicht mehr scharf abgeknickt wird. Die hakenförmige Aufhängevorrichtung ist unverlierbar am Versorgungskabel gehalten und an beliebiger Stelle des Kabels durch Klemmen festlegbar. Die bietet auch die Möglichkeit, die Aufhängevorrichtung in einem Abschnitt zwischen dem Handgriff des Handgeräts und dem Anschlussstecker festzulegen. Die hakenförmige Aufhängevorrichtung kann dann beispielsweise dazu dienen, das herabhängende Versorgungskabel an einer geeigneten Stelle aufzuhängen. Dies kann beispielsweise erwünscht sein, um zu verhindern, dass das Versorgungskabel in einer Pfütze zu liegen kommt. Indem die Aufhängevorrichtung unverlierbar gehalten und entlang des Versorgungskabels frei verschieblich ist, kann sie bei der Unterbringung des Hangeräts in einem Transportkoffer, der üblicherweise relativ knapp bemessen und in erster Linie auf die Gerätegehäuseabmessungen abgestellt ist, an eine Stelle des Versorgungskabels verschoben werden, an der sie problemlos im Transportkoffer unterbringbar ist. Nach der Entnahme des Handgeräts aus dem Transportkoffer kann die Aufhängevorrichtung wieder zurückgeschoben und mit der Anschlussvorrichtung am Handgriff verbunden werden.

In einer vorteilhaften Variante weist die Aufhängevorrichtung ein Hakenteil und ein daran anschliessendes, im wesentlichen zylindrisches Anschlussteil mit einer Durchführung für das Versorgungskabel auf. Der Innendurchmesser der Durchführung ist wenigstens bereichsweise mit Hilfe eines Klemmhebels verringerbar. Der Klemmhebel ist dazu am zylindrischen Anschlussteil angelenkt und weist ein in die Durchführung ragendes Exzenterelement auf. Die derart ausgebildete Aufhängevorrichtung ist mit einer Hand greif- und bedienbar. Sie ist mit Hilfe des Klemmhebels an einer beliebigen Stelle des Versorgungskabels festlegbar. Der Exzenter verringert den Innendurchmesser der Durchführung in einem Ausmass, das ausreicht, die Aufhängevorrichtung gegen ein selbsttätiges Verschieben, beispielsweise durch das Gewicht des herabhängenden Kabels, zu sichern. Andererseits ist die Klemmung nur so stark, dass das Versorgungskabel im geklemmten Bereich nicht beschädigt wird. Bei einer grösseren Belastung, beispielsweise durch manuelles Ziehen am Versorgungskabel bei gleichzeitigem Festhalten der Aufhängevorrichtung, ist die Aufhängevorrichtung trotz der Klemmung verschiebbar. Dadurch ist sichergestellt, dass das Handgerät nur dann mittels der Aufhängevorrichtung aufgehängt werden kann, wenn das Anschlussteil fest mit den Anschlussvorrichtungen am Handgriff verbunden ist. Ein Herabhängen des Handgeräts vom mittels der festgeklemmten Aufhängevorrichtung aufgehängten Kabel ist dadurch verhindert.

In einer besonders einfachen Ausführungsvariante der Aufhängevorrichtung ist das Exzenterelement an der Schwenkachse des Klemmhebels angeordnet.

Die Schwenkachse des Klemmhebels ist am zylindrischen Anschlussteil der Aufhängevorrichtung in zwei Lagerpositionen verschiebbar, die verschieden weit in die Durchführung ragen. Die beiden Lagerpositionen sind durch einen Verschiebeschlitz miteinander verbunden, der vorzugsweise eine etwas kleinere Schlitzweite aufweist als der Durchmesser der Achshalterungen der Schwenkachse, damit die Achshalterungen nicht selbsttätig verrutschen können. Durch Verschieben der Schwenkachse von der äusseren Lagerposition in die weiter innen liegende kann der Innendurchmesser der Durchführung in einem grösseren Umfang verringert werden. Dies ermöglicht eine sehr einfache Anpassung der Klemmvorrichtung an unterschiedliche Durchmesser entlang des Versorgungskabels. Beispielsweise ist für die Anbindung der Aufhängevorrichtung an die Anschlussvorrichtung am Handgriff oder im Bereich der Knickschutztülle eine geringere Klemmung und damit eine geringere Verringerung des Innendurchmessers der Durchführung erforderlich als an anderen Positionen des Versorgungskabels, an denen das Kabel im allgemeinen einen geringeren Durchmesser besitzt.

Das Hakenteil der Aufhängevorrichtung ist mit einer Aussenfläche versehen, die eine muldenartige Vertiefung aufweist. Die muldenartige Vertiefung erstreckt sich sich vom an das Hakenteil angrenzenden zylindrischen Anschlussteil über einen Grossteil der Längserstreckung des Hakenteils. Die muldenartige Vertiefung an der Aussenfläche des Hakenteils bildet eine Führung für das sich an der Aufhängevorrichtung abstützende Versorgungskabel. Dadurch wird im normalen Betrieb des Handgerätes bei auftretenden Relativverschwenkungen des Handgeräts das Versorgungskabel besser mitgeführt. Auf diese Weise können Knickbewegungen des Kabels vermieden werden.

Zur besseren Festlegung des Hakenteils, beispielsweise an einer Gerüststrebe oder an einer Leitersprosse, sind an der Innenfläche des Hakenteils rillenartige Vertiefungen vorgesehen, die im wesentlichen senkrecht zur Längserstreckung des Hakenteils verlaufen.

In einer besonders vorteilhaften Ausführungsvariante der Erfindung ist die Spannweite des Hakenteils der Aufhängevorrichtung veränderbar. Dazu kann beispielsweise das Hakenteil teleskopisch auseinanderziehbar sein. In einer alternativen Ausbildung kann das Hakenteil bezüglich seiner Krümmung veränderbar sein. Dazu ist das Hakenteil beispielsweise in einzelne Segmente unterteilt, die über rastbare Gelenkverbindungen miteinander verbunden sind. Alternativ kann das Hakenteil aus einem Kunststoff bestehen, der unter Aufbietung einer Mindestkraft plastisch verformbar ist.

Die Anschlussvorrichtung am Handgriff kann beispielsweise nach Art einer Schwalbenschwanzführung ausgebildet sein, die mit korrespondierenden Gegenstücken an der Aufhängevorrichtung zusammenwirkt. In einer sehr einfach und kostengünstig zu realisierenden Ausführungsvariante ist die Anschlussvorrichtung von einem im wesentlichen zylindrischen Kragen gebildet, der die Durchtrittsöffnung für das Versorgungskabel begrenzend von der Aussenseite des Handgriffs abragt. Der zylindrische Kragen ist mit Vorteil integral mit der Griffschale ausgebildet. Zur Fixierung der Aufhängevorrichtung am Gerätegehäuse wird deren zylindrisches Anschlussteil einfach über den Kragen geschoben und mit dem Klemmhebel lösbar arretiert.

In einer vorteilhaften Ausgestaltung sind an der Aussenseite des zylindrischen Kragens Vertiefungen ausgebildet, die vorzugsweise in einem regelmässigen Winkelabstand von etwa 60° bzw. 90° entlang des Umfangs des Kragens angeordnet sind. Die Vertiefungen dienen als formschlüssige Aufnahme für das Exzenterelement am Klemmhebel. Dadurch ist die Aufhängevorrichtung entsprechend dem Winkelabstand der Vertiefungen in unterschiedlichen Winkelstellungen des Hakenteils am Handgriff arretierbar.

Indem an der Aussenseite des zylindrischen Kragens eine umlaufende Ringnut vorgesehen ist, die als formschlüssige Aufnahme für das Exzenterelement am Klemmhebel dient, kann die Aufhängevorrichtung relativ zum Handgriff beliebig um ihre Längsachse gedreht und in der gewünschten Lage fixiert werden.

Im folgenden wird die Erfindung unter Bezugnahme auf ein in den Zeichnungen dargestelltes Ausführungsbeispiel näher erläutert. Es zeigen:
- Fig. 1: eine explodierte perspektivische Darstellung der erfindungswesentlichen Bestandteile eines erfindungsgemässen Handgeräts;
- Fig. 2: den Handgriff des Handgeräts aus Fig. 1 mit angebundener Aufhängevorrichtung in perspektivischer Darstellung; und
- Fig. 3: eine Schnittdarstellung des Handgriffs mit angebundener Aufhängevorrichtung.

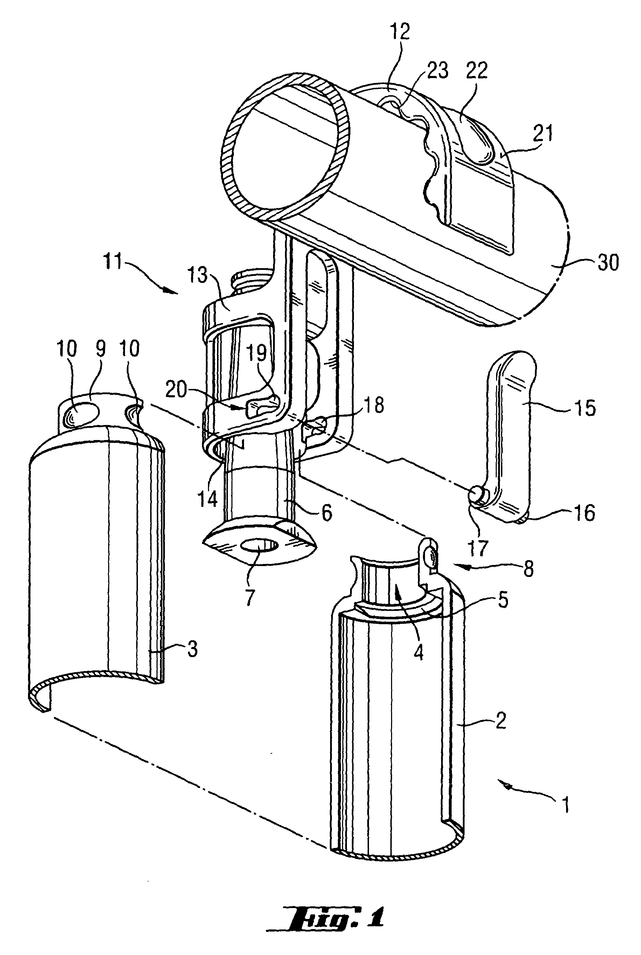

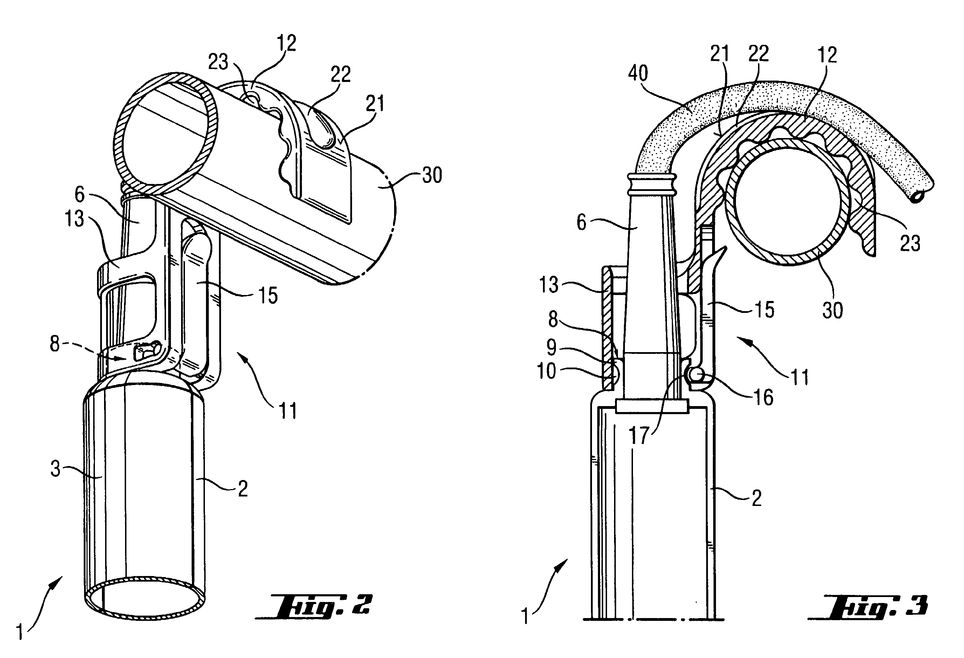

In den Fig. 1 - 3 bezeichnet das Bezugszeichen 1 jeweils den Handgriff eines nicht näher dargestellten, elektrisch betreibbaren Handgeräts, beispielsweise eines Elektroschraubers und/oder eines Bohrgeräts. Der Handgriff 1 kann beispielsweise integral am Gerätegehäuse angeformt sein. Vielfach ist der Handgriff 1 auch ein separates Teil, das mit dem Gerätegehäuse verschraubt wird. Diese verschiedenen Varianten für Handgriffe sind von den im Handel erhältlichen Handgeräten hinlänglich bekannt. Die nachfolgende Beschreibung beschränkt sich daher auf die für das Verständnis der Erfindung wesentlichen Bestandteile.

Der Handgriff 1 ist üblicherweise aus zwei Griffschalen 2, 3 zusammengesetzt, an denen Aussparungen vorgesehen sind, die im zusammengesetzten Zustand eine Durchtrittsöffnung 4 für ein meist in einer Knickschutztülle 6 geführtes, elektrisches Versorgungskabel 40 (Fig. 3) bilden. Die mit einer Bohrung 7 für das Versorgungskabel versehene Knickschutztülle 6 ist in Rückhalteaussparungen 5 in den Griffschalen 2, 3 formschlüssig gehalten. Im Bereich der Durchtrittsöffnung 4 ragen von den Griffschalen halbzylindrische Fortsätze ab. Bei zusammengesetzten Griffschalen 2, 3 bilden die Fortsätze einen zylindrischen Kragen 9, der die Durchtrittsöffnung 4 umgibt.

Der zylindrische Kragen 9 bildet eine Anschlussvorrichtung 8 für eine Aufhängevorrichtung 11, die aus einem Hakenteil 12 und einem daran anschliessenden, im wesentlichen zylindrischen Anschlussteil 13 mit einer Durchführung 14 für die Knickschutztülle 6 bzw. das Versorgungskabel 40 besteht. Der Innendurchmesser der Durchführung 14 im zylindrischen Anschlussteil 13 ist derart bemessen, dass die Aufhängevorrichtung 11 bei Bedarf beliebig entlang des Versorgungskabels 40 verschiebbar ist und dennoch unverlierbar gehalten ist. Zur Festlegung der Aufhängevorrichtung 11 sind am rahmenartig ausgebildeten, zylindrischen Anschlussteil 13 jeweils paarweise einander gegenüberliegende Lagerpositionen 18, 19 ausgespart, die der Lagerung einer Schwenkachse 16 eines Klemmhebels 15 dienen. Die Lagerpositionen 18, 19 sind derart angeordnet, dass die Schwenkachse 16 mehr oder weniger weit in den Öffnungsquerschnitt der Durchführung 14 verschiebbar ist. Dies erlaubt es, die Aufhängevorrichtung 11 sowohl an einer beliebigen Stelle des Versorgungskabels 40 festzuklemmen, als auch am abragenden Kragen 9 festzulegen, der infolge der Knickschutztülle 6 einen grösseren Aussendurchmesser aufweisen muss als das Versorgungskabel 40. Die beiden Lagerpositionen 18, 19 sind über einen Verschiebeschlitz 20 miteinander verbunden. Die Schlitzweite ist geringfügig kleiner als der Aussendurchmesser der Achshalterungen. Dadurch kann die Schwenkachse 16 nicht selbsttätig verrutschen.

An der Aussenseite des zylindrischen Kragens 9 sind Vertiefungen 10 vorgesehen, die in einem Winkelabstand von beispielsweise etwa 60° oder 90° am Umfang des Kragens 9 angeordnet sind. Die Vertiefungen 10 dienen als formschlüssige Aufnahme für das an der Schwenkachse 16 des Klemmhebels 15 angeordnete Exzenterelement 17. Dadurch ist die Aufhängevorrichtung 11 in einer definierten Winkelstellung am Hangriff 1 festlegbar. Anstelle von einzelnen Vertiefungen kann an der Aussenseite des Kragens 9 auch eine umlaufende Ringnut vorgesehen sein. Dann ist die Aufhängevorrichtung 11 in jeder beliebigen Orientierung des Hakenteils 12 am Kragen 9 festlegbar. An der Aussenfläche 21 des Hakenteils 12 ist eine muldenartige Vertiefung 22 vorgesehen. Die Vertiefung 22 erstreckt sich vom zylindrischen Anschlussteil 13 über einen Grossteil der Längserstreckung der Aussenfläche 21 des Hakenteils 12. Die muldenartige Vertiefung 22 dient der besseren Führung und Abstützung des Versorgungskabels 40, wie es in Fig. 1 angedeutet ist.

Das Hakenteil 12 der Aufhängevorrichtung 11 ist beispielsweise in eine Leitersprosse oder in eine Strebe eines Gerüsts einhängbar, die in Fig. 1 - 3 jeweils mit dem Bezugszeichen 30 angedeutet ist. Zur Verbesserung der Halterung sind an der Innenseite des Hakenteils 12 rillenartige Vertiefungen 23 vorgesehen, die im wesentlichen senkrecht zur Längserstreckung des Hakenteils 12 verlaufen. Die rillenartigen Vertiefungen 23 verbessern den Halt der Aufhängevorrichtung 11, indem sie in vorhandene Unebenheiten oder in bereits vorhandene Rillen an einer Strebe, einer Sprosse oder dergleichen Gegenstück eingreifen. Die rillenartigen Vertiefungen 23 erlauben es auch, die Aufhängung 11 beispielsweise an einer Leiste oder Öse mit deutlich kleinerem Durchmesser als die Hakenweite einzuhängen, und verhindern, dass das Handgerät herunterfällt. In einer nicht näher dargestellten Variante der Erfindung ist die Hakenweite des Hakenteils 12 veränderbar und an die jeweiligen Verhältnisse anpassbar. Beispielsweise ist dazu das Hakenteil teleskopartig ausziehbar. In einer alternativen Ausführung besteht das Hakenteil aus Einzelsegmenten, die über rastbare Gelenke miteinander verbunden sind. Schliesslich kann das Hakenteil auch aus einem plastisch verformbaren Material bestehen, welches nur unter Aufbietung einer Mindestkraft verformbar ist, die grösser ist als die Gewichtskraft des aufgehängten Handgeräts.

## Patentansprüche

1. Elektrisch betreibbares Handgerät mit einer Aufhängevorrichtung (11), insbesondere Elektroschrauber und/oder Bohrgerät, mit einer innerhalb eines Gerätegehäuses drehbar gelagerten Antriebsspindel, die der Aufnahme eines Werkzeugs dient und von einem elektrischen Antriebsmotor drehantreibbar ist, der innerhalb des mit einem Handgriff (1) versehenen Gerätegehäuses angeordnet ist, und einem elektrischen Versorgungskabel (40), das durch eine vorzugsweise im Handgriff (1) vorgesehene Durchtrittsöffnung (4) geführt ist und im Durchführungsbereich vorzugsweise von einer Knickschutztülle (6) umgeben ist, wobei angrenzend an die Durchtrittsöffnung (4) für das Versorgungskabel (40) an der Aussenseite des Handgriffs (1) eine Anschlussvorrichtung (8) für eine Aufhängevorrichtung (11) vorgesehen ist, **dadurch gekennzeichnet, dass** die Aufhängevorrichtung ein Hakenteil (12), über das das Handgerät insbesondere an einer Leitersprosse einhängbar ist, und eine mit dem Hakenteil (12) verbundene Durchführung (14) aufweist, die unverlierbar entlang des Versorgungskabe (40) vom Handgritt (1) weg frei verschiebbar ist und die zum Festlegen an beliebiger Stelle des Versorgungskabels (40) einen verringerbaren Öffnungsquerschnitt aufweist.

2. Handgerät nach Anspruch 1, **dadurch gekennzeichnet, dass** die Aufhängevorrichtung (11) ein Hakenteil (12) und ein daran anschliessendes, im wesentlichen zylindrisches Anschlussteil (13) mit einer Durchführung (14) für das Versorgungskabel (40) aufweist, deren Innendurchmesser bereichsweise mit Hilfe eines Klemmhebels (15) verringerbar ist, der am zylindrischen Anschlussteil (13) angelenkt ist und ein in die Durchführung ragendes Exzenterelement (17) aufweist.

3. Handgerät nach Anspruch 2, **dadurch gekennzeichnet, dass** das Exzenterelement (17) an der Schwenkachse (16) des Klemmhebels (15) angeordnet ist.

4. Handgerät nach Anspruch 3, **dadurch gekennzeichnet, dass** am zylindrischen Anschlussteil (13) wenigstens zwei voneinander verschiedene Lagerpositionen (18, 19) für die Schwenkachse (16) ausgespart sind, die über einen Verschiebeschlitz (20) miteinander verbunden sind, wobei wenigstens eine der Lagerpositionen (19) innerhalb des Öffnungsquerschnitts der Durchführung (14) angeordnet ist.

5. Handgerät nach einem der Ansprüche 2 - 4, **dadurch gekennzeichnet, dass** das Hakenteil (12) eine Aussenfläche (21) aufweist, die mit einer muldenartigen Vertiefung (22) ausgestattet ist, welche sich vom angrenzenden zylindrischen Anschlussteil (13) über einen Grossteil der Längserstreckung des Hakenteils (12) erstreckt.

6. Handgerät nach einem der Ansprüche 2 - 5, **dadurch gekennzeichnet, dass** an der Innenfläche des Hakenteils (12) rillenartige Vertiefungen (23) vorgesehen sind, die im wesentlichen senkrecht zur Längserstreckung des Hakenteils (12) verlaufen.

7. Handgerät nach einem der Ansprüche 2 - 6, **dadurch gekennzeichnet, dass** die Spannweite des Hakenteils (12) veränderbar ist.

8. Handgerät nach einem der Ansprüche 2 - 7, **dadurch gekennzeichnet, dass** die Anschlussvorrichtung (8) von einem im wesentlichen zylindrischen Kragen (9) gebildet ist, der die Durchtrittsöffnung (4) für das Versorgungskabel (40) begrenzend von der Aussenseite des Handgriffs (1) abragt.

9. Handgerät nach Anspruch 8, **dadurch gekennzeichnet, dass** an der Aussenseite des zylindrischen Kragens (9) Vertiefungen (10) ausgebildet sind, die vorzugsweise in einem regelmässigen Winkelabstand von etwa 60° bzw. 90° entlang des Umfangs des Kragens (9) angeordnet sind und als formschlüssige Aufnahme für das Exzenterelement (17) am Klemmhebel (15) dienen.

10. Handgerät nach Anspruch 8, **dadurch gekennzeichnet, dass** an der Aussenseite des zylindrischen Kragens (9) eine vorzugsweise umlaufende Ringnut vorgesehen ist, die als formschlüssige Aufnahme für das Exzenterelement (17) am Klemmhebel (15) dient.

## Claims

1. An electrically operable hand-tool with a suspension device (11), in particular an electric screwdriver and/or drill, with a driving spindle rotatably mounted inside a tool housing, which spindle serves to receive a tool and is rotatably drivable by means of an electric drive motor which is arranged inside the device housing provided with a handle (1), and with an electrical supply cable (40) which is guided through a through opening (4) provided preferably in the handle (1) and is preferably surrounded in the opening region by an anti-kink sleeve (6), wherein a connecting device (8) for a suspension device (11) is provided adjacent to the through opening (4) for the supply cable (40) on the outside of the handle (1), **characterised in that** the suspension device exhibits a hook section (12), by means of which the hand-tool may be suspended, in particular on a ladder peg, and an opening (14) communicating with the hook section (12), which device may be fixedly displaced along the supply cable, away from the handle, and which exhibits a reducible opening cross-section for fixing at any point on the supply cable.

2. The hand-tool according to Claim 1, **characterised in that** the suspension device (11) has a hook section (12) and an essentially cylindrical connecting section (13) connecting to it, with an opening (14) for the supply cable (4), the inside diameter of which opening can be reduced in certain regions by means of a clamping lever (15) which is articulated to the cylindrical connecting section (13) and exhibits an eccentric element (17) projecting into the opening.

3. The hand-tool according to Claim 2, **characterised in that** the eccentric element (17) is arranged on the pivoting axis (16) of the clamping lever (15).

4. The hand-tool according to Claim 3, **characterised in that** at least two different bearing positions (18, 19) are cut out on the cylindrical connecting section (13) for the pivoting axis (16), which positions are connected to one another by a displaceable slot (20), wherein at least one of the bearing positions (19) is arranged inside the opening cross-section of the opening (14).

5. The hand-tool according to one of Claims 2-4, **characterised in that** the hook section (12) exhibits an outer surface (21) which is provided with a trough-like recess (22) which extends from the adjacent cylindrical connection section (13) over most of the longitudinal extension of the hook section (12).

6. The hand-tool according to one of Claims 2-5, **characterised in that** groove-like recesses (23) are provided on the inner surface of the hook section (12), which recesses run essentially perpendicularly to the longitudinal extension of the hook section (12).

7. The hand-tool according to one of Claims 2-6, **characterised in that** the span of the hook section (12) is variable.

8. The hand-tool according to one of Claims 2-7, **characterised in that** the connection device (8) is formed by an essentially cylindrical collar (9) which projects from the through opening (4) for the supply cable (40) and is delimited by the outside of the handle (1).

9. The hand-tool according to Claim 8, **characterised in that** recesses (10) are formed on the outside of the cylindrical collar (9), which recesses are preferably arranged at a regular angular spacing of approx. 60° and 90° respectively along the periphery of the collar (9) and serve to receive the eccentric element (17) positively on the clamping lever (15).

10. The hand-tool according to Claim 8, **characterised in that** a preferably rotary annular groove is provided on the outside of the cylindrical collar (9), which groove serves to receive the eccentric element (17) positively on the clamping lever (15).

## Revendications

1. Appareil portatif à entraînement électrique avec un dispositif de suspension (11), en particulier visseuse électrique et/ou perceuse, comprenant une broche d'entraînement qui est montée à rotation à l'intérieur d'un carter d'appareil et qui sert à recevoir un outil et est apte à être entraînée en rotation par un moteur électrique d'entraînement disposé à l'intérieur du carter d'appareil muni d'une poignée (1), et comprenant un câble d'alimentation électrique (40) qui traverse une ouverture traversante (4) ménagée de préférence dans la poignée (1) et qui, dans la zone de traversée, est entouré de préférence par un manchon antipliage (6), un dispositif de liaison (8) pour un dispositif de suspension (11) étant prévu sur le côté extérieur de la poignée (1) au voisinage de l'ouverture traversante (4) destinée au câble d'alimentation (40), **caractérisé en ce que** le dispositif de suspension comporte une partie en crochet (12), permettant d'accrocher l'appareil portatif en particulier à un barreau d'échelle, et un passage (14), lequel est relié à la partie en crochet (12), peut être déplacé librement, sans risque de perte, le long du câble d'alimentation (40) dans la direction opposée à la poignée (1) et présente une section d'ouverture rétrécissable pour le bloquer en n'importe quel endroit du câble d'alimentation (40).

2. Appareil portatif selon la revendication 1, **caractérisé en ce que** le dispositif de suspension (11) comporte une partie en crochet (12) et une partie de liaison sensiblement cylindrique (13) qui s'y raccorde et qui comporte pour le câble d'alimentation (40) un passage (14) dont le diamètre intérieur est rétrécissable par endroits à l'aide d'un levier de serrage (15), lequel est articulé sur la partie de liaison cylindrique (13) et comporte un élément excentrique (17) qui fait saillie dans le passage.

3. Appareil portatif selon la revendication 2, **caractérisé en ce que** l'élément excentrique (17) est disposé sur l'axe de pivotement (16) du levier de serrage (15).

4. Appareil portatif selon la revendication 3, **caractérisé en ce que** dans la partie de liaison cylindrique (13) sont ménagés pour l'axe de pivotement (16) au moins deux emplacements de positionnement différents l'un de l'autre (18, 19) qui sont reliés entre eux par l'intermédiaire d'une fente de déplacement (20), au moins un des emplacements de positionnement (19) étant disposé à l'intérieur de la section d'ouverture du passage (14).

5. Appareil portatif selon une des revendications 2 à 4, **caractérisé en ce que** la partie en crochet (12) possède une face extérieure (21) pourvue d'un creux formant cuvette (22) qui, à partir de la partie de liaison cylindrique adjacente (13), s'étend sur une grande partie de l'extension longitudinale de la partie en crochet (12).

6. Appareil portatif selon une des revendications 2 à 5, **caractérisé en ce que** sur la face intérieure de la partie en crochet (12) sont prévus des creux en forme de stries (23) qui s'étendent sensiblement perpendiculairement à l'extension longitudinale de la partie en crochet (12).

7. Appareil portatif selon une des revendications 2 à 6, **caractérisé en ce que** la portée de la partie en crochet (12) est modifiable.

8. Appareil portatif selon une des revendications 2 à 7, **caractérisé en ce que** le dispositif de liaison (8) est formé par un collet sensiblement cylindrique (9) qui dépasse du côté extérieur de la poignée (1) en délimitant l'ouverture traversante (4) destinée au câble d'alimentation (40).

9. Appareil portatif selon la revendication 8, **caractérisé en ce que** sur le côté extérieur du collet cylindrique (9) sont prévus des creux (10) qui sont disposés de préférence à une distance angulaire régulière d'environ 60°, respectivement 90°, le long de la circonférence du collet (9) et qui servent à recevoir par complémentarité de formes l'élément excentrique (17) du levier de serrage (15).

10. Appareil portatif selon la revendication 8, **caractérisé en ce qu'**une gorge annulaire de préférence périphérique, servant à recevoir par complémentarité de formes l'élément excentrique (17) du levier de serrage (15), est prévue sur le côté extérieur du collet cylindrique (9).
